# EUROPÄISCHE PATENTANMELDUNG

(11) **EP 1 790 308 A1**
(43) Veröffentlichungstag der Anmeldung: **30.05.2007**
(21) Anmeldenummer: 05090327.7
(22) Anmeldetag: 25.11.2005
(51) Int. Cl.: A61C 5/04, A61C 5/02

(54) **Sonde, Verfahren und Kit und ihre Verwendung zum apikalen Abdichten eines Zahnwurzelkanals**

(71) Anmelder: Walther, Thomas, 10407 Berlin (DE); Lietzau, Markus, 14165 Berlin (DE)
(72) Erfinder: Walther, Thomas, 10407 Berlin (DE); Lietzau, Markus, 14165 Berlin (DE)
(74) Vertreter: Boeckh, Tobias

(57) **Zusammenfassung**

Die Erfindung betrifft ein Verfahren und ein Kit zur Herstellung eines Verschlussmittels zum apikalen Abdichten eines Zahnwurzelkanals, zur Verbesserung von Wurzelkanalfüllungen; die Erfindung betrifft auch die Verwendung von Knochenkleber und Guttapercha als Apikalkorken zum Verschließen von Wurzelkanälen.

## Beschreibung

Die Erfindung betrifft ein Verfahren und ein Kit zur Herstellung eines Verschlussmittels zum apikalen Abdichten eines Zahnwurzelkanals, zur Verbesserung von Wurzelkanalfüllungen; die Erfindung betrifft auch die Verwendung von Knochenkleber und Guttapercha als Apikalkorken zum Verschließen von Wurzelkanälen.

Es ist bekannt, dass die Pulpa des Zahnes aufgrund von genügend starken Irritationen - z. B. Karies, Traumata oder präparatorische Maßnahmen - mit Entzündungen reagiert. Diese und andere Gründe können eine Wurzelkanalbehandlung erforderlich machen. Unabhängig davon, welches Verfahren zur späteren therapeutischen oder prophylaktischen Wurzelfüllung verwandt wird, ist zunächst die Öffnung des Zahnes, einschließlich der Pulpa, mit mechanischen (z. B. Bohrern) und mit chemischen Mitteln erforderlich.

Die bekannten Aufbereitungen des Wurzelkanals betreffen die Erweiterung, Reinigung und Formgebung des Wurzelkanals, insbesondere durch eine biomechanische Aufbereitung, die insbesondere das Feilen und Spülen des Wurzelkanals bis zur im Wesentlichen absoluten Formgebung und Sauberkeit umfasst. Anschließend wird die Wurzel gefüllt, wobei es das Ziel der Wurzelfüllung ist, das gesamte Kanalsystem möglichst auf Dauer hermetische zu verschließen, um das Eindringen von Mikroorganismen oder Flüssigkeiten nach der Behandlung zu verhindern.

Für die Wurzelfüllung stehen dem Fachmann verschiedene Techniken zur Verfügung. Eine bekannte Technik ist beispielsweise die so genannte laterale Kondensation, bei der ein mit Dichtzement (Sealer) beschichteter, langer - den Zahnkanal ausfüllender - Guttapercha-Stift in den zuvor aufbereiteten Kanal eingebracht wird. Durch Spreaden und das Einführen weiterer Guttapercha-Stifte (Guttapercha-Points) wird der Kanal nahezu vollständig gefüllt. Die laterale Kondensation der akzessorischen Stifte ermöglicht hierbei eine Dichtesteigerung der Guttapercha-Füllung, was jedoch nur mit sehr großem Zeitaufwand möglich ist. Ein weiteres Problem entsteht dadurch, wenn zuviel Sealer an die Guttapercha-Pointspritze angetragen wird oder wenn generell übermäßig Sealer verwendet wird, da in diesen Fällen die Gefahr des Überstopfens besteht. Das übermäßige Sealer-Material dringt dann am Ende der Wurzel aus und lagert sich im umgebenden Knochen ein.

Ein weiteres Zahnfüllverfahren besteht aus der Verwendung von thermoplastischem Füllmaterial (Thermafill, Dentsply Maillefer, Ballaigues, Schweiz). Bei dem thermoplastischen Füllmaterial ist es erforderlich, dass ein konisch aufbereiteter Kanal im Zahn zur Verfügung steht und dass ein unversehrter apikaler Abschluss des Zahnes - beispielsweise durch das Einbringen von Sealer - bereitgestellt ist. Diese Voraussetzungen für das thermoplastische Füllmaterial beschreiben aber auch gleichzeitig den entscheidenden Nachteil dieses Verfahrens, da es leicht zur Überpressungen von Sealer über den A-pex hinaus kommen kann. Hierdurch wird das Zementmaterial in das den Zahn umgebende Gewebe eingepresst und dauerhaft eingelagert. Durch das eingelagerte Zementmaterial kann es zu unerwünschten Abwehrreaktionen im Gewebe oder zur Zystenbildung kommen.

Ein weiteres bekanntes Verfahren ist die thermoplastische Kondensation. Voraussetzung hierfür ist ein unversehrtes und enges Foramen apicale. Bei diesem Verfahren wird ein speziell angepasster Guttapercha-Point durch Reibungswärme an der Kanalwand plastifiziert. Die Guttapercha wird hierbei apikal und an die Kanalwand gerieben. Auch bei diesem Verfahren besteht die Gefahr der Überfüllung mit Sealer.

Außerdem hat der Fachmann die Möglichkeit, den Wurzelkanal durch eine thermoplastische Injektion zu behandeln, bei der außerhalb des Mundes erwärmtes Guttapercha mittels einer Injektionsspritze in den Kanal eingebracht wird. Da die Guttapercha in flüssigem Zustand eingebracht wird, besteht auch hier die Gefahr des Überstopfens, wodurch Guttapercha-Material über den Zahnkanal hinaus in das umgebende Gewebe eingebracht wird. Ein weiterer Nachteil dieses Verfahrens ist, dass immer ein unversehrtes Foramen apicale als Voraussetzung für eine erfolgreiche Wurzelfüllung zur Verfügung stehen muss.

Allen bekannten Verfahren ist gemeinsam, dass das verwendete Füllmaterial durch die Gefahr des Überstopfens aus dem Wurzelkanal hinaus in das umgebende Gewebe gepresst werden kann. Hierdurch können Entzündungen initiiert werden bzw. eine Zystenbildung, die zum Knochensubstanzverlust führt und zu erheblichen Schmerzen bei den Patienten. Wenn diese Nachteile einmal eingetreten sind, ist eine Revision des gesamten Verfahrens erforderlich, bzw. eine Wurzelspitzenresektion bzw. die Extraktion des Zahnes. Derartige Therapien sind mit hohen Kosten und/oder operativen Eingriffen verbunden.

Aufgabe der Erfindung war es daher, Mittel und Verfahren bereitzustellen, die die Nachteile des Standes der Technik nicht aufweisen, und die insbesondere eine einfache, sichere und effektive Behandlung eines Zahnes, insbesondere eine sichere Wurzelfüllung ermöglichen.

Die Erfindung löst diese Aufgabe durch die Bereitstellung einer Sonde zur apikalen Verblockung eines Wurzelkanals, wobei diese Sonde einen Guttapercha-Korken umfasst. In der einfachsten Form ist die Erfindung demgemäß ein Guttapercha-Korken, der in den apikalen Bereich eines Zahnwurzelkanals einbringbar ist.

Selbstverständlich kann die Sonde neben dem Guttapercha-Korken noch weitere Bestandteile umfassen. Insbesondere kann die Sonde ein stab-, röhren- und/oder schlauchförmiges Instrument sein, das zur Untersuchung oder Behandlung in Gewebe, insbesondere in Zahngewebe bzw. in einen geöffneten Wurzelkanal, eingeführt wird. Es kann sich bei der Sonde um ein Handinstrument aus Kunststoff, aber auch aus Stahl oder Keramik handeln, oder einer Kombination aus diesen, an welchem ein Guttapercha-Korken angebracht ist, der apikal einen Zahnwurzelkanal verschließen, d. h. verblocken soll. Hierzu kann der Guttapercha-Korken an dem stab-, röhren- und/oder schlauchförmigen Teil der Sonde lose angebracht sein oder angeklebt vorliegen bzw. über eine Sollbruchstelle verbunden sein.

Guttapercha im Sinne der Erfindung ist jedes chemische Material, das dem Kautschuk chemisch nahe steht. Es ist insbesondere eingetrockneter Milchsaft der im malaiischen Raum heimischen Palaquium-Bäume. Bevorzugt ist es bei Zimmertemperatur hart und wenig elastisch und wird bei ca. 50 Grad Celsius weich und knetbar. Es besteht vor allem aus trans-1,4-verknüpftem Polyisopren. Das Guttapercha im Sinne der Erfindung kann daher jedes Terpen sein, dass sich biosynthetisch von Isopren bzw. Isopentenyleinheiten ableiten lässt. Hierbei bestehen die Einheiten aus 5 Kohlenstoffatomen. Diese Terpene können unterschiedliche funktionelle Gruppen aufweisen. Demgemäß ist Guttapercha im Sinne dieser Erfindung ein Sammelbegriff für elastische Polymere.

Der Guttapercha-Korken kann selbstverständlich auch ein Material sein, welches neben den organischen Bestandteilen auch Metall umfasst bzw. weitere organische oder überwiegend anorganische chemische Materialien, wie z. B. Kunststoff, Porzellan oder Glas.

Der Korken kann von seiner Gestalt her bevorzugt so ausgeprägt sein, dass er den apikalen Bereich eines Zahnwurzelkanals verschließt bzw. verblockt. Da eine Zahnwurzel konisch verläuft, verjüngt sie sich zum Ende immer mehr, sodass es bevorzugt sein kann, dass der Korken ebenfalls eine konische Form aufweist. Der Korken weist beispielsweise einen Durchmesser von 0,01 bis 5 mm auf, insbesondere im Bereich von 0,1 bis 1 mm. Die Längendimensionierung orientiert sich an Parametern des Durchmessers, kann jedoch ca. 20% größer oder kleiner sein. D. h. in einer bevorzugten Ausführungsform der Erfindung ist der Korken in seiner konischen Ausprägung etwas länger als er breit ist. Es kann jedoch auch bevorzugt sein, dass der Korken breiter als länger ist; in diesem Falle hätte er beispielsweise einen Durchmesser von 1 mm und eine Länge von 0,5 mm. Selbstverständlich ist es auch möglich, dass der Guttapercha-Korken einen größeren bzw. kleineren Durchmesser bzw. eine größere bzw. eine kleinere Länge als oben angegeben aufweist.

Die erfindungsgemäße Sonde kann vielfältig in der Zahnmedizin eingesetzt werden. Vor allem wird sie zur Wurzelkanalbehandlung eingesetzt, die im Sinne der Erfindung jede Behandlung in der Endodontie ist, insbesondere mit dem Ziel, einen Zahn zu erhalten. Aber auch jeder andere kariöse Defekt, der als Eintrittspforte für Krankheitserreger dienen kann, kann unter Verwendung der Sonde oder des erfindungsgemäßen apikalen Wurzelfüllmaterials oder des Apikal-Korkens prophylaktisch oder therapeutisch behandelt werden. Weiterhin können Wurzelfüllmaterial, Apikal-Korken und/oder die Sonde bzw. der Kit auch für den Verschluss von Perforationen bei der Wurzelkanalaufbereitung (bevorzugt via falsa) verwendet werden. Weiterhin ist es möglich, die erfindungsgemäßen Mittel auch zum Verschluss von Perforationen einzusetzen, die bei missglückten Trepanationen eines Zahnes entstehen (bevorzugt Perforationen des Pulpa-Kammerbodens). Außerdem können die erfindungsgemäßen Mittel auch zum Verschluss von apikalen, accessorischen Kanälen des Wurzelkanals wie auch für den Verschluss von weit geöffneten Foramina, insbesondere bei Kindern, verwendet werden. Die erfindungsgemäße Sonde kann demgemäß immer dann eingesetzt werden, wenn prophylaktisch oder therapeutisch beispielsweise eine Wurzelspitzenresektion vorgenommen werden soll, z. B. um die Bildung von Entzündungs- oder Zystengewebe zu beseitigen oder einzuschränken. Die Sonde dient hierbei dazu, den hermetischen und/oder bakteriendichten apikalen Verschluss insbesondere des aufbereiteten und gereinigten Wurzelkanal-Systems zur Verhinderung einer Reinfektion zu ermöglichen. Dieser apikale Verschluss ist die Voraussetzung für die Wurzelfüllung und für den koronalen Verschluss.

In einer bevorzugten Ausführungsform der Erfindung ist der Guttapercha-Korken über eine Sollbruchstelle mit einem in den Wurzelkanal einführbaren Haltestab wirkverbindbar. Die Sollbruchstelle ist in dem Gesamtsystem der Sonde ein Bauteil, das bei einer leichten Drehbewegung des Haltestabes zerstört wird und so die Positionierung des Guttapercha-Korkens im apikalen Bereich des Wurzelkanals ermöglicht. Die Einbringung des Korkens in den Wurzelkanal erfolgt bevorzugt hierbei so, dass eine apikale, hermetische und/oder bakteriendichte Verblockung erreicht wird. Die Sollbruchstelle ist hierbei z. B. so ausgebildet, dass sie bei einer gezielten Überlastung zerstört wird. Diese gezielte Überlastung ist beispielsweise ein halbe oder vollständige bzw. eine mehrfache Drehung in eine und/oder beide Richtungen. Hierdurch soll verhindert werden, dass der Guttapercha-Korken sich früher als gewünscht vom Haltestab abtrennt.

In einer weiteren vorteilhaften Ausführungsform der Erfindung weist der Guttapercha-Korken einen Kern auf, der aus Nicht-Guttapercha-Material besteht. Bevorzugt ist dieser Kern aus Kunststoff, Metall und/oder Porzellan gebildet. Porzellan umfasst im Sinne der Erfindung alle Keramikmaterialien, die in der Zahnmedizin angewandt werden können. Der Metallkern im Sinne der Erfindung umfasst insbesondere Edelmetalle, wie z. B. Gold, Platin und/oder Palladium. Der Kunststoffkern kann aus Thermoplasten bestehen oder aber aus Duroplasten oder Elastomeren. Bevorzugte Thermoplasten im Sinne der Erfindung sind Polypropylen, Polyethylen, Polyethylenterephthalat, Polystyrol, Polyacetal, Polyamid, Polyethersulfon, Polycarbonat, Polyphenylensulfid, Polytetrafluorethylen, Polyetheretherketon und/oder Polyimid und/oder aber Mischungen aus zwei oder mehreren Thermoplasten. Bei den Duroplasten handelt es sich bevorzugt um Kunstharze wie beispielsweise Epoxide, die bevorzugt so abgewandet bzw. behandelt werden, dass sie medizinisch unbedenklich sind. Bei den Elastomeren handelt es sich um alle Arten von vernetztem Kautschuk, wie beispielsweise Naturkautschuk, Acrylnitril-Butadien-Kautschuk, StyrolButadien-Kautschuk, Chloropren-Kautschuk, Butadien-Kautschuk und/oder Ethylen-Propylen-Dien-Kautschuk, wobei diese Materialien beispielsweise durch chemische Behandlungen oder mechanische/physikalische Vorgänge so abgeändert werden, dass sie medizinisch unbedenklich sind, sofern dies erforderlich ist.

Bevorzugt ist der Kunststoff ausgewählt aus der Gruppe umfassend 1,4-verknüpfte Polyisoprene, bevorzugt Kautschuk, Gummi, Latex oder Guttapercha (z. B. in einer anderen Modifikation als das umgebende Guttapercha).

In einer bevorzugten Ausführungsform ist der Kunststoffkern, der von Guttapercha umgeben ist, über eine Sollbruchstelle mit dem Haltestab der Erfindung verbunden. Besonders bevorzugt ist es hierbei, dass der Kunststoffkern, die Sollbruchstelle und der Haltestab aus ein und demselben Material bestehen.

In einer weiteren bevorzugten Ausführungsform besitzt der Haltestab ein flexibles Mittelstück und/oder eine Meßskala. Besonders bevorzugt ist es, dass der Haltestab ein flexibles Mittelstück aufweist, sowie einen insbesondere verdickten Bereich, der eine Meßskala aufweist. Dieser Bereich kann als Handstück ausgeprägt sein, mit dem das behandelnde Fachpersonal den Guttapercha-Korken positioniert. Es kann vorteilhaft sein, dass der Haltestab, insbesondere im Bereich des Handstückes, eine ISO-Normierung aufweist. Die Meßskala, die beispielsweise eine Farb- und/oder Längenmarkierung enthalten kann, kann auch Informationen über die verschiedenen Konizitäten des Guttapercha-Korkens beinhalten. Bevorzugt sind beispielsweise 1 bis 10%ige, bevorzugt 3 bis 6%ige, besonders bevorzugt 4%ige Konizitäten.

Bevorzugt wird der Guttapercha-Korken bzw. die Sonde so eingesetzt, dass zunächst der Wurzelkanal apikal verschlossen wird und anschließend der Wurzelkanal mit bekannten Methoden gefüllt wird. Diese Füllung kann mit der bekannten thermoplastischen Wurzelfüllung, mit der lateralen und vertikalen Kondensation oder aber mit der Zentralstift-Paste-Methode oder der thermoplastischen Injektion durchgeführt werden. Der Fachmann kennt diese auch oben beschriebenen Methoden gut, so dass diese hier im Detail nicht ausgeführt werden müssen.

Die Erfindung betrifft auch ein Verfahren zur Vorbereitung einer Wurzelkanalfüllung, wobei der Wurzelkanal apikal verblockt wird. Diese apikale Verblockung erfolgt mittels des Guttapercha-Korkens und/oder mittels eines Knochenklebers. Der Knochenkleber kann beispielsweise Silikate und/oder Silane umfassen. Mögliche Knochenkleber können Kalziumphosphatzemente umfassen, aber auch Monomere und Comonomere, Hydroxyapatit, Polymere auf Methylacrylatbasis sowie auf Komposit-Basis; weiterhin kann "Cerasorb" eingesetzt werden (ein Kleber, der Kalziumionen umfasst); weitere Knochenkleber im Sinne der Erfindung sind Methacrylate, Knochenkleber auf Zementbasis sowie "Gelrin" (ein aus Fibrin und Glykol bestehender Kleber). Dem Fachmann sind weitere Knochenkleber bekannt.

Für das Verfahren zur Wurzelkanalfüllung bzw. zur Vorbereitung einer Wurzelkanalfüllung gelten die oben gemachten Ausführungen zur Verwendung der erfindungsgemäßen Sonde.

Demgemäß umfasst die Erfindung auch apikales Wurzelfüllmaterial, welches Knochenkleber und/oder einen Guttapercha-Korken umfasst.

Weiterhin betrifft die Erfindung einen Apikal-Korken zur Vorbereitung einer Wurzelkanalfüllung, der Guttapercha und/oder Knochenkleber umfasst. Es ist bevorzugt, dass das Wurzelfüllmaterial und/oder der Apikal-Korken so ausgebildet sind, dass sie nicht in den nicht-apikalen Bereich der Zahnwurzel hineinreichen. D. h. die Erfindung umfasst keinen Guttapercha-Korken, der so ausgebildet ist, dass er aus dem apikalen Bereich in den Wurzelkanal hineinreicht, oder, zu welchem Zeitpunkt der Verwendung auch immer, über diesen hinausragt.

Ziel und Gegenstand der erfindungsgemäßen Lehre ist der Abschluss des apikalen Bereichs des geöffneten Wurzelkanals, so dass später eingebrachtes Material, welches der Zahnfüllung dient, nicht mehr durch Überpressung aus dem Wurzelkanal hinaus ins umgehende Gewebe gelangen kann. D. h. der erfindungsgemäße Guttapercha-Korken oder der Knochenkleber dient nicht zum vollständigen Auffüllen des Wurzelkanals, sondern allein zur apikalen Verblockung. Die Verblockung umschreibt hierbei die Positionierung des Guttapercha-Korkens bzw. des Knochenklebers in dem apikalen Bereich, so dass das nachträglich eingebrachte Wurzelfüllmaterial nicht aus dem Wurzelkanal in apikaler Richtung austreten kann. Die Verblockung erfolgt hierbei bevorzugt hermetisch und/oder bakteriendicht bzw. im Wesentlichen hermetisch und/oder im Wesentlichen bakteriendicht. Das erfindungsgemäße Verfahren gemäß der Ansprüche erfolgt vor allem kosmetisch. Das erfindungsgemäße Verfahren wird in Europa nicht zur Behandlung des menschlichen oder tierischen Körpers in dem Sinne eingesetzt, dass sie die Erhaltung oder Wiederherstellung der Gesundheit oder die Vermeidung von Schmerz oder Beschwerden zum Ziel haben. Durch das erfindungsgemäße Verfahren sollen demgemäß in Europa ausschließlich kosmetische Probleme gelöst werden, bzw. Probleme, die einen störenden (aber nicht gesundheitsschädigenden) Einfluss auf die Zahngesundheit haben. Sofern im Zusammenhang mit der Erfindung von therapeutischen Behandlungen oder Verfahren gesprochen wird, beschränkt sich dies in Bezug auf Europa daher auf die Verwendung der erfindungsgemäßen Mittel zur Herstellung eines Behandlungsmittels für die therapeutische Behandlung von pathologischen Veränderungen der Zahnwurzel, insbesondere auf die Verblockung bzw. Sicherung des periapikalen Knochens sowie Sicherung des Foramen apicale. Daher kann das Verfahren auch auf die Herstellung eines Behandlungsmittels gerichtet sein, das zur Wiederherstellung eines gesunden Zustandes einer Zahnwurzel bzw. zur Sicherung des Foramen apicale bzw. zur Sicherung des periapikalen Knochens herangezogen wird, wobei ein Guttapercha-Korken bzw. Knochenkleber verwendet werden. Sofern die erfindungsgemäße Lehre, dies meint in diesem Zusammenhang das Verfahren, auch in den USA eingesetzt wird, gelten die o. g. Beschränkungen nicht, so dass sich das Verfahren direkt auf die therapeutische Behandlung eines Zahnwurzelkanals richtet.

Die Erfindung betrifft auch einen Kit, der den erfindungsgemäßen Guttapercha-Korken bzw. den Knochenkleber umfasst, ggf. mit einer Information zum Kombinieren oder Verwenden der Inhalte des Kits. Selbstverständlich ist es auch möglich, dass der Kit die erfindungsgemäßen Sonden umfasst, wobei die Sonden bevorzugt eine Farbkodierung oder aber eine Farb-und/oder Längenkodierung aufweisen. Bevorzugt umfasst der Kit mehrere Guttapercha-Korken bzw. verschiedene Sonden, die Guttapercha-Korken mit verschiedenen Konizitäten aufweisen. Die Information zum Kombinieren der Inhalte bzw. zum Verwenden der Inhalte des Kits können beispielsweise einen Therapieplan bwz. einen Plan zur Behandlung oder Vorbeugung von Zahnläsionen umfassen, insbesondere für die Behandlung von Wurzelkanälen und deren Füllung.

Bevorzugt weist der Guttapercha-Korken keinen Sealer auf. Selbstverständlich kann es auch vorgesehen sein, dass der Guttapercha-Korken zusammen mit Sealer (Dichtzement) eingesetzt wird.

Bevorzugt ist eine Sonde, dadurch gekennzeichnet, dass der Kunststoff-, Metall- und/oder Porzellankern, die Sollbruchstelle und der Haltestab dasselbe Material umfassen.

Bevorzugt ist eine Sonde, dadurch gekennzeichnet, dass der Haltestab ein flexibles Mittelstück umfasst.

Bevorzugt ist eine Sonde, dadurch gekennzeichnet, dass der Haltestab eine Meßskala aufweist.

Bevorzugt ist eine Sonde, dadurch gekennzeichnet, dass der Haltestab zusätzlich eine ISO-Normierung aufweist.

Bevorzugt ist eine Sonde, dadurch gekennzeichnet, dass der Kunststoff ausgewählt ist aus der Gruppe umfassend aus Polyethylen, Polypropylen, Polyvinylchlorid, Polystyrol, Polyurethan, Polyethylenterephthalat, Acrylnitril-Butadien-StyrolCopolymerisat, Acrylester-Styrol-Acrylnitril-Terpolymer, Celluloseacetat, Epoxidharz, Harnstoff-Formaldehydharz, Isopren-Kautschuk, Melamin-Formaldehydharz, Naturkautschuk, Phenol-Formaldehydharz, Polyamid, Polybutylenterephthalat, Polycarbonat, Polyacetal, Polylactid, Polychlortrifluorethylen, Polyester, Polyisobutylen, Polymethylmethacrylat, Styrol-Acrylnitril-Copolymerisat, Polystyrol schlagfest, Polytetrafluorethylen, Polyvinylacetat, Silikonkautschuk und/oder Zellulosenitrat.

Bevorzugt ist eine Sonde, dadurch gekennzeichnet, dass der Guttapercha-Korken konisch ausgebildet ist.

Bevorzugt ist eine Sonde, dadurch gekennzeichnet, dass das Material des Guttapercha-Korken ausgewählt ist aus der Gruppe umfassend aus 1,4-verknüpfte Polyisoprene, bevorzugt Kautschuk, Gummi, Latex und/oder Guttapercha.

Bevorzugt ist ein Verfahren, dadurch gekennzeichnet, dass die apikale Verblockung mittels eines Guttapercha-Korkens und/oder mittels eines Knochenklebers erfolgt.

Bevorzugt ist ein Verfahren zur Wurzelkanalfüllung, dadurch gekennzeichnet, dass es eine nachfolgende Wurzelfüllung mit der Einstifttechnik, lateralen Kondensation und/oder mit thermoplastischem Füllmaterial umfasst.

Bevorzugt ist ein apikales Wurzelfüllmaterial umfassend Knochenkleber und/oder einen Guttapercha-Korken.

Bevorzugt ist ein Wurzelfüllmaterial, dadurch gekennzeichnet, dass es nicht in den nicht-apikalen Bereich des Wurzelkanals hineinreicht.

Bevorzugt ist ein Apikalkorken zur Vorbereitung einer Wurzelkanalfüllung, dadurch gekennzeichnet, dass er Guttapercha und/oder Knochenkleber umfasst.

Bevorzugt ist ein Verfahren zum bakteriendichten Verschluss eines Wurzelkanals, dadurch gekennzeichnet, dass ein separater apikaler Verschlussstopfen in den Wurzelkanal eingebracht wird, wobei der Stopfen einen Knochenkleber und/oder einen Guttapercha-Korken umfasst.

Bevorzugt ist ein Kit umfassend eine Sonde und/oder ein apikales Wurzelfüllmaterial, ggf. zusammen mit einer Information zum Kombinieren oder Verwenden der Inhalte des Kits.

Bevorzugt ist ein Kit, dadurch gekennzeichnet, dass die Sonden in dem Kit eine Farbkodierung oder aber eine Farb-und/oder Längenmarkierung aufweisen.

Bevorzugt ist ein Kit, dadurch gekennzeichnet, dass die Guttapercha-Korken der Sonden verschiedene Konizitäten aufweisen.

Bevorzugt ist ein Kit, dadurch gekennzeichnet, dass der Guttapercha-Korken keinen Sealer umfasst.

Bevorzugt ist eine Verwendung des Kits, des Wurzelfüllmaterials und/oder des Apikalkorkens zur apikalen Wurzelkanalfüllung.

Die Erfindung betrifft auch eine Vorrichtung zum apikalen Einbringen von Knochenkleber in einen Wurzelkanal, wobei die Vorrichtung folgende Bestandteile umfasst: ein Kleberdepot, einen Druckstempel, ein Druckstempel-Oberteil, einen normierten Klickansatz eines Führungsstiftes, einen Gummistopper zur Längensicherung, eine Meßskalierung, einen Führungsstift mit Applikationsschläuchen, einen integrierten Applikationsschlauch, eine ISO-normierte Stiftspitze mit seitlich befindlichen Applikationsschlauchausführungsgängen, ein Klicksystem am Kleberdepot und/oder einen Applikationsschlauchansatz.

Die erfindungsgemäße Lehre weist daher die folgenden Vorteile auf:
- Abkehr vom technisch Üblichen
- neue Aufgabenstellung
- Vorliegen eines seit langem ungelösten dringenden Bedürfnisses für die Lösung des mit der Erfindung gelösten Problems
- bisheriges vergebliches Bemühen der Fachwelt
- Einfachheit einer Lösung spricht für erfinderische Tätigkeit, insbesondere wenn sie kompliziertere Lehren ersetzt
- Entwicklung der wissenschaftlichen Technik ging in eine andere Richtung
- entwicklungsstraffende Leistung
- Fehlvorstellungen der Fachwelt über die Lösung des entsprechenden Problems (Vorurteil)
- technischer Fortschritt, wie z. B.: Verbesserung, Leistungssteigerung, Verbilligung, Ersparnis an Zeit, Material, Arbeitsstufen, Kosten oder schwer beschaffbaren Rohstoffen, erhöhte Zuverlässigkeit, Beseitigung von Fehlern, Qualitätshebung, Wartungsfreiheit, größere Effektivität, höhere Ausbeute, Vermehrung der technischen Möglichkeiten, Bereitstellung eines weiteren (nicht notwendig besseren) Mittels, Eröffnung eines zweiten (nicht notwendigerweise besseren) Weges, Eröffnung eines neuen Gebietes, erstmalige Lösung einer Aufgabe, Reservemittel, Alternativen, Möglichkeit der Rationalisierung, Automatisierung oder Miniaturisierung oder Bereichung des Arzneimittelschatzes
- glücklicher Griff (wird aus einer Vielzahl von Möglichkeiten eine bestimmte gewählt, deren Ergebnis nicht vorausgesagt werden konnte, so handelt es sich um ein patentwürdigen glücklichen Griff)
- Irrtum in Entgegenhaltungen
- junges Gebiet der Technik
- Kombinationserfindung, d.h. mehrere bekannte Elemente werden zu einer Kombination zusammengeführt, die einen überraschenden Effekt aufweist
- Lizenzvergabe
- Lob der Fachwelt und
- wirtschaftlicher Erfolg.

Insbesondere gelang es der Fachwelt nicht, den Zahnkanal am apikalen Ende zu verdichten und somit eine suffizientere Wurzelzahnfüllung zu erhalten. Insbesondere bei Kinderzähnen wird mit der Erfindung ein bisher ungelöstes Problem gelöst. Bei Kinderzähnen ist das Foramen apicale noch nicht spitz zulaufend, eher parallelwandig. Daraus ergibt sich das Problem der endodontischen Behandlung, da die Gefahr eines Überstopfens von Füllmaterial sehr groß ist. Der Guttapercha-Korken löst dieses Problem, insbesondere wenn er eine höhere Größe mit steilerer Konizität aufweist. Durch die erfindungsgemäße Lehre kommt es daher zu einer Sicherung des Foramen apicale durch Verhinderung des Überpressens, Überstopfens und/oder Überlaufens bei Verfahren, bei denen ein mechanisch bzw. chemisch geöffneter Zahnwurzelkanal gefüllt wird. Die oben genannten Vorteile der erfindungsgemäßen Lehre lassen sich im Detail wie folgt darlegen.
- Abkehr vom technisch Üblichen:
   Es wird ein apikaler (an der Wurzelspitze befindlicher) Stopp in den Wurzelkanal (nachfolgend WK genannt) eingebracht, was bisher neu ist und zu überraschenden Resultaten führt. Ein direkt chemisch härtender Stoff im WK ist bisher unbekannt. Ein skalierter, flexibler, der Krümmung des WK folgender Stift mit ablösbarem Guttapercha-Pfropf oder -Korken ist technisch neu und wird im Stand der Technik nicht nahegelegt.
- Neue Aufgabenstellung:
   Sowohl mit dem Guttapercha-Korken, als auch mit dem Knochenkleber wird die Hauptfehlerquelle der misserfolgten WF, das Überpressen von Füllmaterial, angegangen und als zentrale Aufgabenstellung verstanden. Alle anderen bisher bekannten WF-Methoden beschränken sich auf das Füllen des Kanals an sich, ohne besonderes Augenmerk auf das Überstopfen von Füllmaterial zu legen.
- Bedürfnisbefriedigung:
   Das Überstopfen/Überpressen und deren Behebung, welches in nahezu allen WF-Methoden ein unbefriedigtes Bedürfnis ist, wird mit beiden apikalen Stopps befriedigt.
- Vergebliches Bemühen der Fachwelt:
   Die bisherigen Methoden der WF gehen die Problematik des Überstopfens nur indirekt an, so wird beispielsweise versucht, über Reibungswärme und der daraus resultierenden Plastifizierung der Guttaperche einen apikalen Abschluss zu finden, was jedoch unsicher ist und immer noch die Fehlerquelle des Überpressens beinhaltet.
- Einfachheit: Guttapercha-Korken
   Die Einfachheit ergibt sich aus der Konstruktion: Durch eine Drehung wird der zuvor in den Kanal gebrachte Guttapercha-Korken von dem Mittelteil gelöst. Zur Überprüfung der Längenbestimmung und des Sitzes des Korkens befindet sich eine Skala am Meßgriff, die einen sofortigen Überblick der Lage des Korkens im Kanal ermöglicht.
   Erfindungsgemäße Vorrichtung:
   Ein Zwei-Depot-System mit flexibler, skalierter Kanüle (gleicher Vorteil siehe Guttapercha-Korken) ist durch einen einfachen Druckmechanismus auszulösen. Es entfällt kompliziertes Einbringen von sonstigem Füllmaterial.
- Verbesserung:
   Es wird ein apikaler Stopp, beispielsweise bei der thermischen Injektion, eingebracht, der oben und unten genannte Verbesserungen mit sich bringt. Die Gefahr des Überpressens wird minimiert, nahezu ausgelöscht und die daraus resultierenden Folgen wie Entzündungen, Zystenbildung, Knochensubstanzverlust, Schmerzen für den Patienten ebenfalls gegen Null gesenkt. Die beiden apikalen Stopps sind auf nahezu alle gängigen Methoden anwendbar. Auch bei anatomischen Abweichungen sind die beiden Stopps anwendbar, was einen Unterschied zu den bisher bekannten Methoden darstellt.
- Verbilligung:
   Die WF-Methoden werden verbessert (s. o.) und die Therapie einer nicht geglückten WF bzw. eines Überpressens, welche mit enormen Kosten verbunden ist, wird ausgeschlossen. Kosten bei einer Revision (Herausholen der alten WF mit anschließender neuer WF) liegen bei ca. 800,00 - 1.000,00 EUR; in Amerika sind die Kosten pro Kanal mit 1.000,00 USD zu beziffern, so dass für einen vollständigen Zahn, der vier bis fünf Kanäle umfassen kann, bis zu 5.000,00 USD zu veranschlagen sind. Kosten bei Zahnextraktion und anschließender Versorgung durch beispielsweise Implantate belaufen sich auf ca. 2.000,00 EUR pro Implantat etc.
- Schonung des Patienten:
   Die Therapie von den unter "Verbesserung" genannten Punkten wie Entzündung, Zystenbildung, Knochenverlust, stellen operative Eingriffe dar. Diese beinhalten nicht nur weitere Kosten (z. B. Knochenaufbau bei Knochenverlust), sondern stellen auch extreme psychische Belastungen für den Patienten dar, u. a. Verlust von Selbstwertgefühl durch fehlende Frontzähne und daraus resultierender Ausschluss aus der sozialen Gesellschaft, etc.
- Ersparnis an Zeit:
   Schweres, lästiges Abmessen der herkömmlichen Guttapercha-Points entfällt durch skalierten Meßgriff. Eine Röntgen(Rö)-Aufnahme wird erspart. Dies ist nicht nur eine Zeitersparnis, sondern auch eine geringere Belastung des Patienten durch Röntgenstrahlen. Des Weiteren stellt diese Ersparnis auch eine Kostenersparnis (Rö-Maschine, Rö-Bilder, Arbeitskraft etc.) dar. Durch einfache Handhabung generelle Ersparnis an Arbeitszeit.
- Zuverlässigkeit:
   Gegeben durch einfache Handhabung und ISO-Normierung des Korkens. Skalierung am Meßgriff macht das Arbeiten genauer und zuverlässiger.
- Wartungsfreiheit:
   Gegeben durch Einmal-Systematik des Korkens und der Kleberkanüle.
- Größere Effektivität:
   Ergibt sich aus Kombination der oben genannten Punkte, wie Einfachheit, Zuverlässigkeit, Wartungsfreiheit etc.
- Kombinationserfindung:
   Bekannte WF-Materialien wie Guttapercha und der Knochenkleber werden mit dem neu entwickelten Meßgriff zusammengeführt und kombiniert.
- Wirtschaftlicher Erfolg:
   Durch kostengünstiges Anbieten der Produkte und deren einfache Handhabung inklusive der Verbesserung der herkömmlichen Techniken ist wirtschaftlicher Erfolg zu erwarten.

Im Folgenden soll die Erfindung anhand von Beispielen und Zeichnungen näher erläutert werden, ohne auf diese beschränkt zu sein.

### Beispiele:

### 1. Guttapercha-Korken

Figur 1

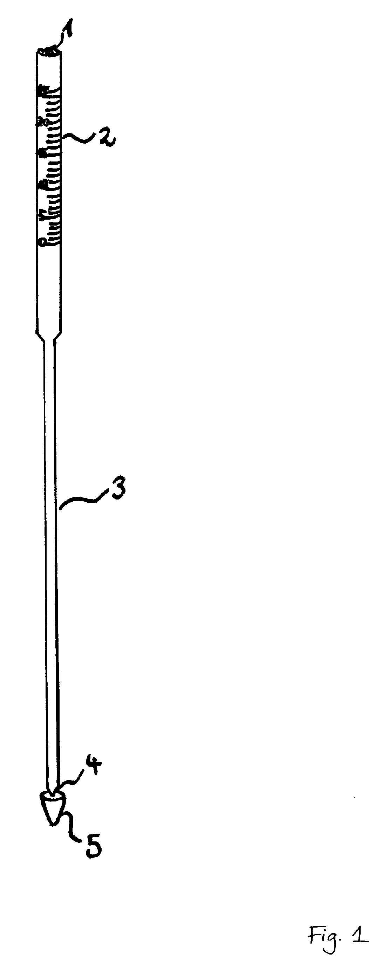

   Die Figur 1 zeigt eine Sonde. Diese umfasst eine ISO-Normierung (1) sowie eine erhabene Meßskala (2), ein flexibles Mittelstück (3) sowie eine Sollbruchstelle (4), woran an ein Guttapercha-Korken mit einem Kunststoffkern (5) angebracht ist.
   Der Kunststoff des bevorzugten erfindungsgemäßen Mittels ist so gewählt, dass er biokompatibel, flexibel und biegsam, stauchfest, untoxisch und rückstellfähig ist. Er wird so produziert, dass das Mittel als Einmal-System zu verwenden ist. Des Weiteren ist die Skalierung des Mittels in 0,5 mm Schritten gehalten, wobei jeder ganze 1 mm-Schritt durch durchgängig gezogene Kreise und jeder 0,5 mm-Schritt durch halbgezogene Kreise dargestellt ist. Alle 5 mm ist eine andere Farbe für die Skalierung gewählt, so dass der Behandler jederzeit die Längenüberprüfung durchführen kann. Außerdem ist an jedem 5. Teilstrich die Länge in Form einer Zahl aufgedruckt (Bsp.: auf der Länge 20 mm steht neben dem Skalierungsstrich eine 20). Die Skalierungsstriche sind als leichte Erhebung auf dem Griff spürbar, so dass der Behandler rutschfest arbeiten kann. Auf dem skalierten Handgriff ist eine Nummer offenbart, die der ISO-Norm des Guttapercha-Korkens entspricht. An der Spitze des bevorzugten erfindungsgemäßen Mittels befindet sich der nach ISO-Norm gefertigte Guttapercha-Korken, der mit dem Mittelteil über eine Sollbruchstelle am Kunststoff befestigt ist. Die Sollbruchstelle ist über eine Viertel-/halbe Drehung zu lösen, so dass der Korken im Wurzelkanal verbleibt. Der Korken an sich besteht aus zahnärztlichem Guttapercha, welches alle Forderungen eines Wurzelkanalfüllungswerkstoffes erfüllt. Der Kern des Korkens besteht aus dem gleichen Kunststoff wie Griff und Mittelteil.
Figur 2:

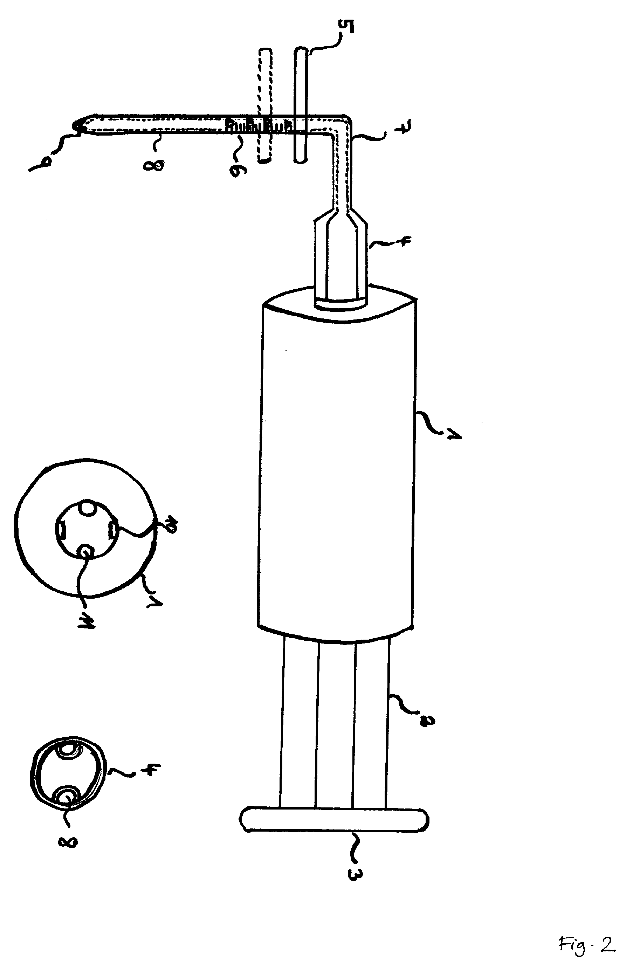

   Die Figur 2 zeigt eine Vorzugsvariante der erfindungsgemäßen Vorrichtung, die aus folgenden Bestandteilen besteht: Kleberdepot (1), Druckstempel (2), Druckstempel-Oberteil (3), normierter Klickansatz des Führungsstiftes (4), Gummistopper zur Längensicherung (beweglich) (5), Meßskalierung (6), Führungsstift mit Applikationsschläuchen (7), integrierte Applikationsschläuche (8), ISO-normierte Stiftspitze mit seitlich befindlichen Applikationsschlauchausführungsgängen (9), Klicksystem am Kleberdepot (10), Applikationsschlauchansatz (verstärkt) (11).
   Die zwei Hauptkomponenten des Klebers werden in zwei separaten Depots im Griffteil der Spritze aufbewahrt, wodurch auch hier die Injektionskanülen als Einmal-System verwendbar sind. Als Injektionskanülenführungsstift wird der gleiche Kunststoff verwandt, wie dies bei der bevorzugten Variante der erfindungsgemäßen Sonde der Fall ist. An dem Führungsstift befindet sich jeweils links-/rechtsseitig ein Injektionsschlauch, der jeweils seine Kleberkomponente nach apikal (zur Wurzelspitze hin) befördert, um dort die beiden Komponenten zusammenfließen zu lassen. Die Skalierung ist auf gleiche Weise gestaltet, wie das für die Figur 1 oben erläutert wurde.

## Patentansprüche

1. Sonde zur apikalen Verblockung eines Wurzelkanals,
**dadurch gekennzeichnet, dass**
sie einen Guttapercha-Korken umfasst.

2. Sonde nach Anspruch 1,
**dadurch gekennzeichnet, dass**
der Guttapercha-Korken über eine Sollbruchstelle mit einem in einen Wurzelkanal einführbaren Haltestab wirkverbindbar ist.

3. Sonde nach dem vorhergehenden Anspruch,
**dadurch gekennzeichnet, dass**
der Guttapercha-Korken einen Kunststoff-, Metall-und/oder Porzellankern umfasst.

4. Sonde nach dem vorhergehenden Anspruch,
**dadurch gekennzeichnet, dass**
der Kunststoff-, Metall- und/oder Porzellankern über die Sollbruchstelle mit dem Haltestab verbunden ist.

5. Verwendung der Sonde nach einem der vorhergehenden Ansprüche,
**dadurch gekennzeichnet, dass**
die Sonde zur prophylaktischen oder therapeutischen Behandlung von Zahnläsionen eingesetzt wird.

6. Verwendung der Sonde nach einem der vorhergehenden Ansprüche,
**dadurch gekennzeichnet, dass**
die Sonde zur Wurzelkanalfüllung eingesetzt wird.

7. Verwendung der Sonde nach einem der vorhergehenden Ansprüche,
**dadurch gekennzeichnet, dass**
der Guttapercha-Korken eine apikale Verblockung des Wurzelkanals ermöglicht und der Wurzelkanal im Folgenden mit den bekannten Methoden befüllbar ist.

8. Verwendung nach dem vorhergehenden Anspruch,
**dadurch gekennzeichnet, dass**
die bekannten Füllverfahren ausgewählt sind aus der Gruppe umfassend Einstifttechnik, laterale Kondensation und/oder der Behandlung mit thermoplastischem Füllmaterial, bevorzugt Thermafill, Dentsply Maillefer, Ballaigues, Schweiz und/oder thermoplastische Injektion.

9. Verfahren zur Vorbereitung einer Wurzelkanalfüllung,
**dadurch gekennzeichnet, dass**
vor der Wurzelkanalfüllung eine apikale Verblockung eines Zahnwurzelkanals vorgenommen wird.

10. Vorrichtung zum apikalen Einbringen von Knochenkleber in einen Wurzelkanal,
**dadurch gekennzeichnet, dass**
die Vorrichtung folgende Bestandteile umfasst: ein Kleberdepot, einen Druckstempel, ein Druckstempel-Oberteil, einen normierter Klickansatz eines Führungsstiftes, einen Gummistopper zur Längensicherung, eine Meßskalierung, einen Führungsstift mit Applikationsschläuchen, einen integrierten Applikationsschlauch, eine ISO-normierte Stiftspitze mit seitlich befindlichen Applikationsschlauchausführungsgängen, ein Klicksystem am Kleberdepot und/oder einen Applikationsschlauchansatz.
